# EUROPEAN PATENT SPECIFICATION

(11) **EP 3 796 342 B1**
(45) Date of publication and mention of the grant of the patent: **01.11.2023**
(21) Application number: 19382808.4
(22) Date of filing: 18.09.2019
(51) Int. Cl.: H01F 27/02, H01F 27/22

(54) **A POWER TRANSFORMER ASSEMBLY AND A THERMAL CONDUCTIVE COMPOUND FOR SEALING A POWER TRANSFORMER ASSEMBLY**
LEISTUNGSTRANSFORMATORANORDNUNG UND WÄRMELEITENDE VERBINDUNG ZUM ABDICHTEN EINER LEISTUNGSTRANSFORMATORANORDNUNG
ENSEMBLE DE TRANSFORMATEUR DE PUISSANCE ET COMPOSÉ THERMOCONDUCTEUR POUR SCELLER UN ENSEMBLE DE TRANSFORMATEUR DE PUISSANCE

(43) Date of publication of application: 24.03.2021
(73) Proprietor: Premo, S.A., 29590 Campanillas Málaga (ES)
(72) Inventor: NAVARRO PÉREZ, Francisco Ezequiel, 08011 Barcelona (ES)
(74) Representative: Juncosa Miró, Jaime

(56) References cited:
- CN-U- 206 864 281
- DE-U1-202011 110 750
- US-A1- 2018 201 818
- US-B2- 9 074 108

## Description

### Technical Field

The present invention relates to a thermal conductive compound comprising a flexible silicone-based resin, for sealing and encapsulating a power transformer assembly.

The thermal conductive compound has been specifically developed for use in power transformers and in power magnetic components which may be subject to high thermal demands due to their working cycles and with a thermal conductivity of 1.4 W/mK to 2.6 W/mK.

### Background of the Invention

Japanese patent JP 4172113 B2 discloses a flame-retardant resin composition capable of providing an injection-moulded product, which is imparted with flame retardant properties by use of a halogen- free flame retardant and, at the same time, is excellent in moisture and heat resistances and residence stability. The resin composition is excellent in heat and humidity resistance characteristics, retention stability, and is used for wire coating materials and moulded articles, for example, electrical and electronic parts such as connectors, relays, switches, case members, transformer members, coil bobbins, etc.

Japanese patent JP 3807139 B2 discloses an electric and electronic component such as an ignition coil which has a long life and a high durability suitable for a higher packaging density and a higher integration. The electronic component is sealed with an epoxy resin or silicone resin. Moreover, in order to lower the linear expansion coefficient and increase the thermal conductivity, generally, inorganic fillers such as silica and aluminium hydroxide can be added. Japanese patent application JP 2003163131 A discloses a method of manufacturing a resin mould coil in which resin is coated around a coil.

US 5021494, US7566500 B1, US 6025435 A, US20080111111 A1 and US2015376488 A1 disclose different thermal conductive silicon compositions useful for applications such as thermal interface materials in electronics packaging and for use as thermally conductive compound materials for transformers, power supplies, coils and other electronic devices that require improved thermal dissipation.

US2003050419A reveals a high thermal conductivity spin castable compound used to encapsulate circuitry, comprising a thermally conductive silicone gel.

US9074108B2 discloses a potting compound suitable for potting an electronic component; in particular a large-volume coil such as a gradient coil, consisting of a supporting matrix in which at least one first filler made of polymer nanoparticles is distributed. The supporting matrix also includes at least one secondary filler that is used as a flame retardant and at least one third filler comprising inorganic particles. The inorganic particles can consist of silicon dioxide (SiO2), aluminum oxide (Al2O3), aluminum nitride (AIN), calcium magnesium dicarbonate (CaMg(CO3)2), titanium dioxide (TiO2), synthetic ceramics, zeolites, chalk, talc (Mg3Si4O10(OH)2), wollastonite (CaSiO3) and/or purely carbon-based particles.

In spite of the cited known solutions, new embodiments of a sealed transformer assembly with increased heat dissipation and preserving the integrity of the components are still desirable.

### Description of the Invention

The invention is defined by the attached independent claims. Embodiments are described in the dependent claims.

To that end, present invention provides according to a first aspect a thermal conductive compound for sealing a power transformer assembly. The thermal conductive compound comprises a silicone resin and fillers at least including a first main filler, and a second filler, the first main filler being a natural mineral filler and the second filler including a given amount of aluminium hydroxide lowering the linear expansion coefficient and increasing the thermal conductivity of said silicone resin.

Unlike the above known proposals, in the present invention the thermal conductive compound comprises said silicone resin, and the fillers further include a third filler comprising a given limited amount of thermoconductive and electroconductive particles providing an electrical resistance to the thermal conductive compound which ensures an electrical isolation of the thermal conductive compound under an electrical voltage above 10 KV.

In an embodiment, the thermoconductive and/or electroconductive particles comprise metallic particles, metallic oxides and graphite.

According to a second aspect there is also provided a power transformer assembly comprising, as known in the field, a (at least one) magnetic core with (at least) first and second wound coils these elements being sealed by a thermal conductive compound with mechanical potting capability comprised of a silicone resin and fillers. The fillers include a first main filler and a second filler. The first main filler is a natural mineral filler, for example made of finely divided particles of quartz, quartzite, marble, sand, calcium carbonate, titanium oxide, among others, and the second filler includes a given amount of aluminium hydroxide lowering the linear expansion coefficient and increasing the thermal conductivity of said silicone resin.

Unlike the above known proposals, the thermal conductive compound comprises said silicone resin, and the fillers further include a third filler comprising a given limited amount of thermoconductive and electroconductive particles such as metallic particles, metal oxides, graphite, etc., that provide an electrical resistance to the thermal conductive compound which ensures an electrical isolation of the thermal conductive compound under an electrical voltage above 10 KV.

The presence of thermal conductive and/or electroconductive particles in the third filler determines a significant increase in the thermal conductivity of the thermal conductive compound and therefore a rise in the heat evacuation capacity thereof.

The aluminium hydroxide lowers the linear expansion coefficient and increases the thermal conductivity of the silicone resin.

It is planned to use in a same thermal conductive compound different natural mineral fillers with diverse granulometries, combined finely divided and compacted.

In an embodiment, the proportion in the thermal conductive compound of the first filler is between 60 and 90%. The given amount of the aluminium hydroxide can be comprised in the range of 1 - 5% by weight with regard to the total weight of the thermal conductive compound including the silicone resin.

The proposed power transformer can comprise several parts or magnetic units each of them including a magnetic core and windings, the several parts or magnetic units being arranged with a central part thereof positioned at a same level such that an isothermal gradient of temperature under working operation of the power transformer including the cited magnetic parts or magnetic units is achieved.

Moreover, the magnetic core(s) and wound coils according to a preferred embodiment are arranged inside a housing (such a metallic box with a cover) delimited by metallic thermo-conductive walls. The metallic box can be made of different materials, for example aluminium, aluminium alloy or magnesium alloy with a thermal conductivity above 70 W/mK. The metallic box is provided in an embodiment with openings 18 on a on a box base wall and in correspondence with the windings and of a size adjusted to them, said openings 18 allowing an optimal heat transfer through the openings 18 towards a dissipation device in adjacent position, such as a liquid cooling dissipation plate.

### Brief Description of the Drawings

The previous and other advantages and features will be more fully understood from the following detailed description of embodiments, with reference to the attached figures, which must be considered in an illustrative and non-limiting manner, in which:
FIG. 1 shows an example of the proposed power transformer assembly including several magnetic units in an exploded perspective view.
FIG. 2 shows a cross-sectional view of one of the magnetic units of the power transformer assembly of FIG. 1.
FIG. 3 shows another exploded perspective view of the metallic box for loading the magnetic units of the power transformer assembly.

### Detailed Description of Preferred Embodiments

Present invention proposes a thermal conductive compound 10 for sealing a power transformer assembly 1. The thermal conductive compound 10 provides thermal transfer capability and mechanical encapsulation to the power transformer assembly 1.

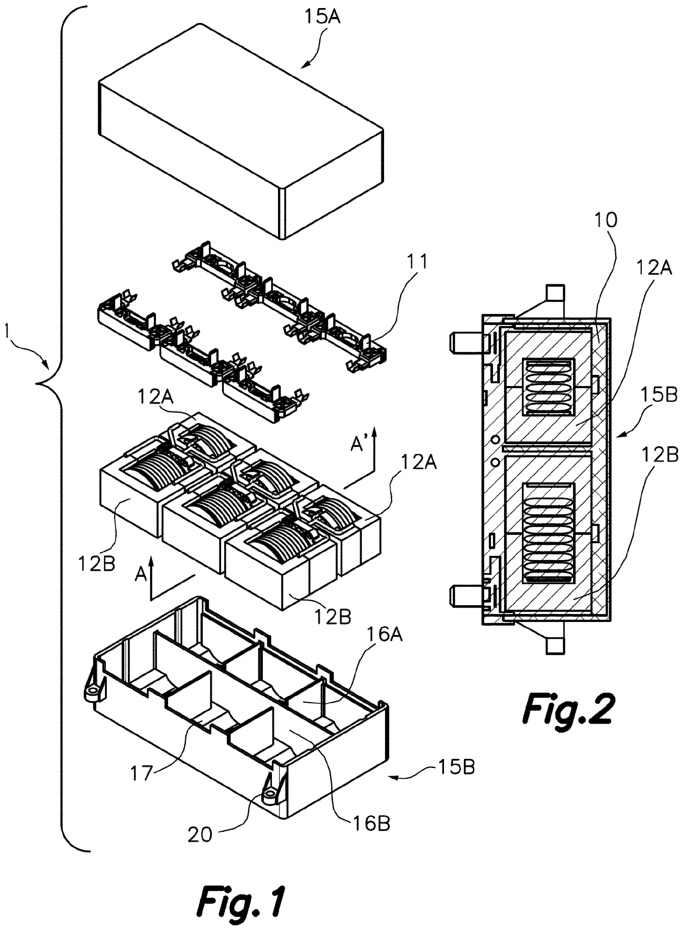

Referring to FIGS. 1 and 2, a power transformer assembly 1 according to a first exemplary embodiment of the present invention includes several magnetic cores 12A, 12B each including a first coil and a second coil wound around them (it should be noted that the power transformer assembly could comprise a single magnetic core 12A, 12B and more coils). The power transformer assembly 1 is sealed by a thermal conductive compound 10 made of a silicone resin and first and second fillers.

The thermal conductive compound is injected into the power transformer assembly 1 by controlled overpressure, removing the air and replacing it and then the thermal conductive compound is cured This increases all thermal interfaces of the power transformer assembly 1 between materials from practically 0 W/mk (air) to a minimum of 1.4 W/mk and significantly increases the thermal dissipation capacities of the transformer assembly.

The first filler is made of a natural mineral filler such as finely divided quartz, quartzite, marble, sand, calcium carbonate and/or titanium oxide. Hence, the manufacturing costs of the power transformer assembly 1 are considerably reduced while the thermal dissipation capabilities of the transformer are improved.

The second filler is made of a given amount of aluminium hydroxide or its derivatives, thus lowering linear expansion coefficient and increasing the thermal conductivity of the silicone resin. Moreover, this compound provides thermal protection against the Curie point of the magnetic core(s) 12A, 12B when subjected to heavy power by adding metal hydroxides that absorb heat by phase change enthalpy and transforming solid to gas (sublimation phase) keeping the temperature stable and below the Curie temperature throughout the process of releasing OH groups transformed into water.

The proportion of said first filler in the thermal conductive compound 10 may vary between 60 and 90%. Different thermal conductivity results can be achieved depending on the remaining part of the thermal conductive compound 10 (i.e. silicone resin and second fillers). For example, with 40% silicone and 60% aluminium hydroxide 1, 05 W/mk are achieved. With 35% silicone and 65% aluminium hydroxide 1, 2 W/mk are achieved.

According to the invention, the thermal conductive compound 10 further includes a third filler comprising a limited amount of electroconductive particles Hence, an electrical resistance is provided to the thermal conductive compound which guarantees its electrical isolation under an electrical voltage above 10 KV.

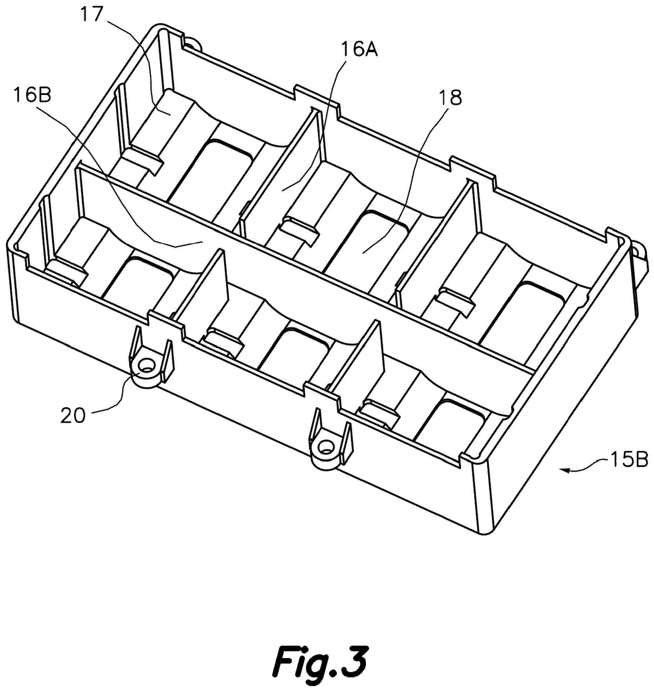

Referring back to FIGS. 1 and 2, the proposed power transformer assembly 1, in this example including several magnetic units arranged/placed inside several cavities of a metallic box 15B (also see FIG.3 for an enlarged view of the metallic box 15B). The metallic box 15B, which may be made of any of aluminium, an aluminium alloy or a magnesium alloy, comprises metallic thermo-conductive walls 16A, 16B for enclosing/delimiting each magnetic core 12A, 12B and corresponding first and second coils and a cover 15A. The material of the metallic box 15B particularly has a thermal conductivity above 70 W/mK. As can be seen in FIG. 1, the assembly particularly also includes a stopper 11 which in this embodiment is an encapsulated electrical terminal that allows the connection of the primary/secondary windings of the magnetic unit within limits of the creepage/clearance electrical isolation. This is important in avoiding dependence on the electrical insulation of the thermal conductive compound 10 that fills the gaps in areas with a short creepage/clearance distance. In addition, the stopper 11 also contributes to securely hold the magnetic cores 12A, 12B inside each of the cavities of the metallic box 15B.

The metallic box 15B is custom designed with a base including one or more openings 18 adjusted to the tolerance of the winding area. This opening 18 allows that when the magnetic core 12A, 12B is installed attached to a liquid cooling dissipation plate, for example a Al plate, the distance from the winding to the cooling aluminium is minimal, allowing an optimal heat transfer due to a reduction of the heat transfer circuit to its minimum expression of thicknesses and materials. Thus, the losses generated in the copper (windings) are therefore eliminated in a shorter space of time and in the most efficient way possible. Likewise, the metallic box is designed with a specifically adjusted inner raised support 17 to accommodate a homogeneous surface of the magnetic cores 12A, 12B. This inner support 17 is in direct contact with the magnetic core(s) 12A, 12B. This allows maximum heat dissipation generated by power losses in the core(s) 12A, 12B. The heat is transferred directly from the magnetic material to the metallic box 15B, and the latter then to the liquid cooling plate. The metallic box 15B includes also mounting holes 20 to attach the metallic box 15B to an installation point.

Particularly, the magnetic cores 12A, 12B are arranged in the different cavities of the metallic box 15B with a central part thereof at a same level, i.e. in a horizontal position, such that an isothermal gradient of temperature under working operation of the power transformer assembly 1 is achieved.

The invention as claimed in claim 1 refers to a specific thermal conductive compound for sealing a power transformer assembly with thermal transfer capability and mechanical encapsulation capacity. This thermal conductive compound has been specifically developed for its application in magnetic power units, providing a thermal conductivity of 1.4 W/mK to 2.6 W/mK.

The thermal conductive compound is comprised of a silicone resin and fillers at least including a first main filler and a second filler. The second filler includes a given amount of aluminium hydroxide lowering linear expansion coefficient and increasing the thermal conductivity of said silicone resin. The first main filler is a natural mineral filler such as finely divided quartz, quartzite, marble, sand, calcium carbonate, titanium oxide, among others.

The thermal conductive compound further includes a third filler comprising electroconductive particles but in a limited amount ensuring an electrical isolation of the thermal conductive compound under an electrical voltage above 10 KV.

The referred thermal conductive compound is injected into the cavities of the metallic box containing the magnetic units, by controlled overpressure, removing the air and replacing it and then the thermal conductive compound is cured. This increases all thermal interfaces of the parts between materials from practically 0 W/mK (air) to a minimum of 1.4 W/mK. This thermal conductive compound increases the thermal dissipation capabilities of the magnetic units.

The present disclosure and/or some other examples have been described in the above. According to descriptions above, various alterations/modifications may be achieved. In particular the invention is applicable to sealing and encapsulating other power magnetic components. All modifications and alterations required to be protected in the claims may be within the protection scope of the present disclosure.

It should also be noted that as the thermal conductive compound is based on a silicone resin i.e. on a "soft" type compound that seals and encapsulates the magnetic power component, this determines that this magnetic component, in addition to being encapsulated, is mechanically protected, which allows avoiding mechanical stress on, for example, in the case of a power transformer, the ferritic cores and their variation in permeability due to the magneto restriction effect.

The scope of the present invention is defined in the following set of claims.

## Claims

1. A thermal conductive compound for sealing a power transformer assembly, said thermal conductive compound (10) comprising a silicone resin and fillers, said fillers at least including a first main filler, and a second filler, the first main filler being a natural mineral filler and the second filler including a given amount of aluminium hydroxide lowering the linear expansion coefficient and increasing the thermal conductivity of said silicone resin, the fillers further including a third filler comprising a given limited amount of thermoconductive and electroconductive particles providing an electrical resistance to the thermal conductive compound (10) which ensures an electrical isolation of the thermal conductive compound (10) under an electric voltage above 10 KV.

2. The thermal conductive compound of claim 1, wherein said thermoconductive and electroconductive particles comprise metallic particles, metallic oxides and graphite.

3. A power transformer assembly (1), comprising at least a magnetic core (12A, 12B) with at least first and second wound coils which are sealed in a box by the thermal conductive compound (10) of claim 1.

4. The power transformer of claim 3, wherein said natural mineral filler is formed at least by finely divided quartz, quartzite, marble, sand, calcium carbonate and/or titanium oxide.

5. The power transformer of claim 3, wherein the proportion in the thermal conductive compound (10) of said first main filler is between 60 and 90%.

6. The power transformer of claim 3 or 4, wherein said natural mineral filler comprises two or more different fillers of diverse granulometry.

7. The power transformer of claim 3, wherein said given amount of the aluminium hydroxide is comprised in the range of 1 and 5% by weight with regard to the total weight of the thermal conductive compound (10).

8. The power transformer of claim 3, wherein it comprises several magnetic units arranged inside a metallic box (15B) wherein magnetic cores (12A, 12B) and wound coils are arranged inside cavities of the metallic box (15B) and delimited by metallic thermoconductive walls (16A, 16B) and a cover (15A).

9. The power transformer of claim 8, wherein the magnetic cores (12A, 12B) of the several magnetic units are arranged with a central part thereof at a same level such that an isothermal gradient of temperature under working operation of the power transformer assembly (1) is achieved.

10. The power transformer of claim 8, wherein said metallic box (15B) is made of aluminium, an aluminium alloy or a magnesium alloy with a thermal conductivity above 70 W/mK.

11. The power transformer of claim 9, wherein the metallic box (15B) has some openings (18) in its base allowing an optimal heat transfer through the openings (18) towards a dissipation element or device located in an adjacent position.

## Patentansprüche

1. Wärmeleitende Verbindung zum Abdichten einer Leistungstransformatoranordnung, wobei die genannte wärmeleitende Verbindung (10) ein Silikonharz und Füllstoffe umfasst, wobei die genannten Füllstoffe mindestens einen ersten Hauptfüllstoff und einen zweiten Füllstoff beinhalten, wobei der erste Hauptfüllstoff ein natürlicher Mineralfüllstoff ist und der zweite Füllstoff eine gegebene Menge an Aluminiumhydroxid beinhaltet, welches den linearen Ausdehnungskoeffizient verringert und die Wärmeleitfähigkeit des genannten Silikonharzes erhöht, wobei die Füllstoffe zusätzlich Folgendes beinhalten
einen dritten Füllstoff umfassend eine gegebene beschränkte Menge an wärmeleitende und elektrisch leitende Partikel, welche der wärmeleitenden Verbindung (10) einen elektrischen Widerstand bereitstellen, was eine elektrische Isolierung der wärmeleitenden Verbindung (10) unter einer elektrischen Spannung über 10 KV gewährleistet.

2. Wärmeleitende Verbindung nach Anspruch 1, wobei die genannten wärmeleitenden und elektrisch leitenden Partikel metallische Partikel, Metalloxide und Grafit umfassen.

3. Leistungstransformatoranordnung (1), mindestens umfassend einen Magnetkern (12A, 12B) mit mindestens ersten und zweiten gewickelten Spulen, welche in einem Kasten mittels der wärmeleitenden Verbindung (10) nach Anspruch 1 abgedichtet sind.

4. Leistungstransformator nach Anspruch 3, wobei der genannte natürliche Mineralfüllstoff mindestens aus feinverteiltem Quarz, Quarzit, Marmor, Sand, Calciumcarbonat und/oder Titanoxid gebildet ist.

5. Leistungstransformator nach Anspruch 3, wobei der Anteil in der wärmeleitenden Verbindung (10) des genannten ersten Hauptfüllstoffs zwischen 60 und 90% liegt.

6. Leistungstransformator nach Anspruch 3 oder 4, wobei der genannte natürliche Mineralfüllstoff zwei oder mehr unterschiedliche Füllstoffe unterschiedlicher Granulometrie umfasst.

7. Leistungstransformator nach Anspruch 3, wobei die genannte gegebenen Menge an Aluminiumhydroxid im Bereich zwischen 1 und 5 Gew.-% in Bezug auf das Gesamtgewicht der wärmeleitenden Verbindung (10) liegt.

8. Leistungstransformator nach Anspruch 3, wobei er mehrere Magneteinheiten umfasst, welche innerhalb eines Metallkastens (15B) angeordnet sind, wobei die Magnetkerne (12A, 12B) und gewickelten Spulen innerhalb Vertiefungen des Metallkastens (15B) angeordnet sind und von metallischen wärmeleitenden Wänden (16A, 16B) und eine Bedeckung (15A) begrenzt sind.

9. Leistungstransformator nach Anspruch 8, wobei die Magnetkerne (12A, 12B) der mehreren Magneteinheiten mit einem mittleren Teil derselben auf einer gleichen Höhe angeordnet sind, sodass ein isothermer Gradient von Temperatur unter Arbeitsbetrieb der Leistungstransformatoranordnung (1) erreicht wird.

10. Leistungstransformator nach Anspruch 8, wobei der genannte Metallkasten (15B) aus Aluminium, einer Aluminiumlegierung oder einer Magnesiumlegierung mit einer Wärmeleitfähigkeit über 70 W/mK hergestellt ist.

11. Leistungstransformator nach Anspruch 9, wobei der Metallkasten (15B) einige Öffnungen (18) in dessen Basis aufweist, sodass eine optimale Wärmeübertragung durch die Öffnungen (18) zu einem Abführungselement oder einer Abführungsvorrichtung hin, welches/welche sich in einer benachbarten Stellung befindet, erlaubt wird.

## Revendications

1. Un composé thermoconducteur pour le scellage d'un assemblage de transformateur de puissance, ce composé thermoconducteur (10) comportant une résine de silicone et des matières de remplissage, ces matières de remplissage comprenant au moins une première matière de remplissage principale et une deuxième matière de remplissage, la première matière de remplissage principale étant une matière de remplissage minérale naturelle et la deuxième matière de remplissage comprenant une certaine quantité d'hydroxyde d'aluminium abaissant le coefficient d'expansion linéaire et augmentant la thermoconductivité de cette résine de silicone, les matières de remplissage comprenant par ailleurs
une troisième matière de remplissage comportant une quantité limitée de particules thermoconductrices et électroconductives offrant une résistance électrique au composé thermoconducteur (10) qui assure une isolation électrique du composé thermoconducteur (10) sous une tension électrique supérieure à 10KV.

2. Le composé thermoélectrique de la revendication 1, dans lequel ces particules thermoconductrices et électroconductrices comportent des particules métalliques, des oxides métalliques et du graphite.

3. Un assemblage de transformateur de puissance (1) comportant au moins un noyau magnétique (12A, 12B) ayant au moins une première et une deuxième bobine qui sont scellées dans une boîte par le composé thermoconducteur (10) de la revendication 1.

4. Le transformateur de puissance de la revendication 3, dans lequel cette matière de remplissage de minéral naturel est formées au moins par du quartz, quartzite, marbre, sable, carbonate de calcium et/ou oxyde de titane finement divisé.

5. Le transformateur de puissance de la revendication 3, dans lequel la proportion dans le composé thermoconducteur (10) de cette première matière de remplissage principale est entre 60% et 90%.

6. Le transformateur de puissance de la revendication 3, ou 4, dans lequel cette matière de remplissage de minéral naturel comporte deux ou plus matières de remplissage ayant une granulométrie différente.

7. Le transformateur de puissance de la revendication 3, dans lequel cette certaine quantité de l'hydroxyde d'aluminium est comprise dans la plage de 1 et 5% du poids par rapport au poids total du composé thermoconducteur (10).

8. Le transformateur de puissance de la revendication 3, dans lequel il comporte plusieurs unités magnétiques aménagées à l'intérieur d'une boîte métallique (15B) où les noyaux magnétiques (12A, 12B) et les bobines enroulées sont aménagés à l'intérieur de cavités de la boîte métallique (15B) et délimités par des parois thermoconductrices (16A, 16B) et un couvercle (15A).

9. Le transformateur de puissance de la revendication 8, dans lequel les noyaux magnétiques (12A, 12B) des diverses unités magnétiques son aménagés avec leur partie centrale au même niveau de sorte qu'un gradient isothermique de température est obtenu lors du fonctionnement de travail de l'assemblage de transformateur de puissance (1).

10. Le transformateur de puissance de la revendication 8, dans lequel cette boîte métallique (15B) et faite en aluminiums et alliage d'aluminium ou alliage de magnésium ayant une thermoconductivité supérieure à 70 W/mK.

11. Le transformateur de puissance de la revendication 9, dans lequel la boîte métallique (15B) possède quelques ouvertures (18) à sa base permettant un transfert de chaleur optimal à travers les ouvertures (18) vers l'élément ou dispositif de dissipation situé dans une position adjacente.
